# EUROPEAN PATENT APPLICATION

(11) **EP 4 645 522 A1**
(43) Date of publication of application: **05.11.2025**
(21) Application number: 23910804.6
(22) Date of filing: 28.12.2023
(51) Int. Cl.: H01M 10/54

(54) **METHOD FOR RECOVERING BATTERY MATERIAL**

(30) Priority: 30.12.2022 CN 202211727072
(71) Applicant: BYD Company Limited, Shenzhen, Guangdong 518118 (CN)
(72) Inventor: JIANG, Zhengfu, Shenzhen, Guangdong 518118 (CN); XU, Chaqing, Shenzhen, Guangdong 518118 (CN); YANG, Shenghu, Shenzhen, Guangdong 518118 (CN); FU, Mei, Shenzhen, Guangdong 518118 (CN); XIA, Yan, Shenzhen, Guangdong 518118 (CN)
(74) Representative: Mathys & Squire
(86) International application number: PCT/CN2023/142633
(87) International publication number: WO 2024/140887

(57) **Abstract**

A method for recovering a battery material. The method comprises: soaking an electrode or a cell in a first phosphoric acid solution for separation to obtain an electrode material, wherein the concentration of the first phosphoric acid solution is less than 10 wt.%; soaking the electrode material in a second phosphoric acid solution, and then filtering same to obtain a first filtrate, wherein the concentration of the second phosphoric acid solution is greater than or equal to 10 wt.%; and adding a first iron source to the first filtrate for reaction, and then filtering same to obtain a second filtrate, wherein the second filtrate has lithium ions, divalent iron ions and phosphate ions.

## Description

This application claims priority to Chinese Patent Application No. 202211727072.7, filed with the China National Intellectual Property Administration on December 30, 2022 and entitled "METHOD FOR RECYCLING BATTERY MATERIAL", which is incorporated herein by reference in its entity.

### TECHNICAL FIELD

This application relates to the field of battery material recycling technologies, and specifically, to a method for recycling battery material.

### BACKGROUND

Electrode materials such as lithium iron phosphate have advantages of stable charging and discharging, good cycle performance, and high safety, and therefore are widely used in batteries. With the extensive use of batteries, the number of spent batteries is also increasing, resulting in waste of resources and environmental pollution. Therefore, recycling of battery materials from spent batteries is particularly important.

### SUMMARY

In view of this, this application provides a method for recycling battery material, to achieve recycling of battery materials, improve utilization of battery materials, and avoid waste of resources.

This application provides a method for recycling battery material, including: an electrode or a battery core is soaked in a first phosphoric acid solution for separation to obtain an electrode material. A concentration of the first phosphoric acid solution is less than 10 wt.%. The electrode material is soaked in a second phosphoric acid solution and filtering is performed to obtain a first filtrate. A concentration of the second phosphoric acid solution is greater than or equal to 10 wt.%. A first iron source is added to the first filtrate and filtering is performed after reaction to obtain a second filtrate. The second filtrate has lithium ions, ferrous ions, and phosphate ions.

In some implementations, the concentration of the second phosphoric acid solution is 10 wt.% to 85 wt.%.

In some implementations, the first iron source includes at least one of elemental iron, ferric oxide, ferroferric oxide, and ferrous oxalate.

In some implementations, that the electrode material is soaked in a second phosphoric acid solution and filtering is performed to obtain a first filtrate includes: the electrode material is soaked in the second phosphoric acid solution at 50°C to 100°C for 3 h to 10 h, then filtering is performed to obtain the first filtrate. The concentration of the second phosphoric acid solution is 10 wt.% to 50 wt.%. Alternatively, the electrode material is soaked in the second phosphoric acid solution at 25°C to 50°C for 0.5 h to 5 h, then filtering is performed to obtain the first filtrate. The concentration of the second phosphoric acid solution is 50 wt.% to 85 wt.%.

In some implementations, the electrode or the battery core includes a phosphate positive electrode active material, and the phosphate positive electrode active material includes at least one of lithium iron phosphate and lithium manganese iron phosphate.

In some implementations, a molar ratio of phosphoric acid in the second phosphoric acid solution to the phosphate positive electrode active material in the electrode material is (3-10):1.

In some implementations, the method further includes: after a molar ratio of the lithium ion to the ferrous ion to the phosphate ion in the second filtrate is adjusted, the phosphate positive electrode active material is obtained through spray drying and sintering.

In some implementations, that a molar ratio of the lithium ion to the ferrous ion to the phosphate ion in the second filtrate is adjusted includes that a molar ratio of the lithium ion to the ferrous ion in the second filtrate is adjusted to 1.03 to 1.05, and a molar ratio of the phosphate ion to the ferrous ion in the second filtrate is adjusted to 1.1 to 1.3.

In some implementations, before the spray drying, the following is further included: a carbon source is added to the second filtrate.

An addition amount of the carbon source is 5% to 20% of a mass of the phosphate positive electrode active material in the second filtrate.

The carbon source includes at least one of glucose, sucrose, maltose, starch, lactose, polyethylene glycol, polyvinyl alcohol, and citric acid.

In some implementations, a temperature of the spray drying is greater than 140°C, and the sintering includes sintering at 550°C to 750°C for 2 h to 10 h.

In some implementations, the method further includes: an oxidant is added to the second filtrate. Filtering is performed after reaction to obtain an iron phosphate precipitate and a third filtrate. A pH value of the third filtrate is adjusted to obtain a lithium phosphate precipitate. The lithium phosphate precipitate and a second iron source are solid-state synthesized into the phosphate positive electrode active material.

In some implementations, the second iron source is the iron phosphate precipitate.

In some implementations, the oxidant includes hydrogen peroxide, and a concentration of the oxidant is 10% to 50%.

In some implementations, that the lithium phosphate precipitate and the second iron source are solid-state synthesized into the phosphate positive electrode active material includes:
under a reducing atmosphere, reaction is performed on the lithium phosphate precipitate and the second iron source at 200°C to 400°C for 1 h to 5 h, and then reaction is performed at a temperature of 550°C to 750°C for 5 h to 10 h, to obtain the phosphate positive electrode active material.

In some implementations, that the lithium phosphate precipitate and the second iron source are solid-state synthesized into the phosphate positive electrode active material includes:
under a reducing atmosphere, the lithium phosphate precipitate and the second iron source are first heated up to 550°C to 750°C, and then reaction is performed on the lithium phosphate precipitate and the second iron source at the temperature of 550°C to 750°C for 5 h to 10 h, to obtain the phosphate positive electrode active material. A rate of the heating up is 2°C/min to 10°C/min.

In some implementations, that the lithium phosphate precipitate and the second iron source are solid-state synthesized into the phosphate positive electrode active material includes:
the lithium phosphate precipitate, the second iron source, and a carbon source are mixed, reaction is performed at 200°C to 400°C for 1 h to 5 h, and then reaction is performed at 550°C to 750°C for 5 h to 10 h, to obtain the phosphate positive electrode active material.

In some implementations, that an electrode or a battery core is soaked in a first phosphoric acid solution includes: the electrode or the battery core is soaked in the first phosphoric acid solution under a condition of 20°C to 30°C for 1 h to 20 h. The concentration of the first phosphoric acid solution is 3 wt.% to 8 wt.%.

In some implementations, that a first iron source is added to the first filtrate and filtering is performed after reaction to obtain a second filtrate includes: the first iron source is added to the first filtrate and filtering is performed after reaction at 25°C to 90°C for 1 h to 5 h, to obtain the second filtrate.

In some implementations, the following is further included: defluorination is performed on the second filtrate.

A fluoride ion concentration of the second filtrate after the defluorination is less than or equal to 10 ppm.

In some implementations, filtering is performed after the electrode material is soaked in the second phosphoric acid solution, to obtain the first filtrate and a graphite residue; the graphite residue and asphalt are mixed at 200°C to 280°C for 2 h to 20 h, to obtain a mixed product; and heat treatment is performed on the mixed product at 1000°C to 1800°C for 3 h to 12 h under an inert atmosphere, to obtain graphite.

According to the method for recycling battery material provided in this application, the second filtrate including the lithium ions, the ferrous ions, and the phosphate ions may be obtained, and the phosphate positive electrode active material, such as lithium iron phosphate, may be obtained using the second filtrate, so that recycling of a battery material is achieved. In addition, other impurity ions are hardly introduced in the method, which avoids impact of the impurity ions on resource recovery and ensures purity and performance of the recycled battery material.

### BRIEF DESCRIPTION OF DRAWINGS

FIG. 1 is a flowchart of a method for recycling battery material according to an implementation of this application;
FIG. 2 is a flowchart of a method for recycling battery material according to another implementation of this application;
FIG. 3 is a flowchart of a method for recycling battery material according to still another implementation of this application;
FIG. 4 is a flowchart of a method for recycling battery material according to still another implementation of this application; and
FIG. 5 is a flowchart of a method for recycling battery material according to still another implementation of this application.

### DESCRIPTION OF EMBODIMENTS

The following clearly and completely describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts fall within the protection scope of this application.

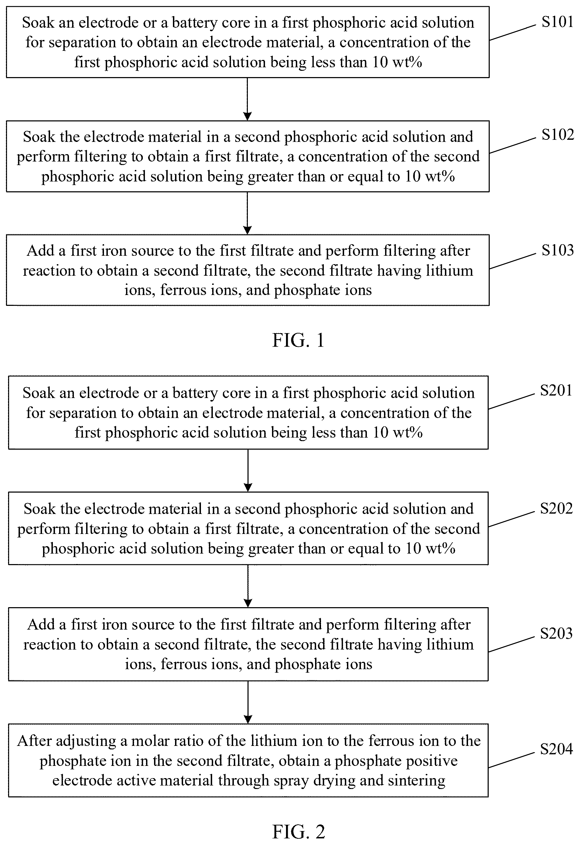

FIG. 1 is a flowchart of a method for recycling battery material according to an implementation of this application, including the following:
S101: an electrode or a battery core is soaked in a first phosphoric acid solution for separation to obtain an electrode material. A concentration of the first phosphoric acid solution is less than 10 wt.%.
S102: the electrode material is soaked in a second phosphoric acid solution and filtering is performed to obtain a first filtrate. A concentration of the second phosphoric acid solution is greater than or equal to 10 wt.%.
S103: a first iron source is added to the first filtrate and filtering is performed after reaction to obtain a second filtrate. The second filtrate has lithium ions, ferrous ions, and phosphate ions.

In the method for recycling battery material provided in this application, the electrode material in the electrode or the battery core is first separated from a current collector and introduction of an element in the current collector is avoided through soaking in the first phosphoric acid solution, then the electrode material is dissolved through soaking in the second phosphoric acid solution, and then the first iron source is added to neutralize residual phosphoric acid to obtain the second filtrate. The second filtrate includes the lithium ions, the ferrous ions, and the phosphate ions, which are conducive to recycling of the phosphate positive electrode active material. Other impurity ions are hardly introduced in the method, which avoids impact of the impurity ions on recycling of the electrode material and ensures purity and performance of recycled lithium iron phosphate.

In S101, the electrode or the battery core may be soaked in the first phosphoric acid solution, and the first phosphoric acid solution is dilute phosphoric acid, so that the electrode material is separated from the current collector and does not react with the current collector, thereby avoiding introduction of impurity elements into the electrode material caused by a rupture of the current collector or the like, and ensuring purity of subsequent recycling.

In this application, the battery core may be obtained by, but not limited to, removing a case of a spent battery or the like, or the electrode may be obtained by removing a separator or the like, and the electrode may be further disassembled into a positive electrode and a negative electrode based on the electrode material to be recycled. Specifically, the electrode may be, but not limited to, in the shape of an electrode plate. In an embodiment, the spent battery is disassembled and the case is removed to obtain the battery core, and the battery core is soaked with the first phosphoric acid solution. The battery core includes solid components such as an electrode and a separator. In another embodiment, the spent battery is disassembled and the case is removed to obtain the electrode, and the electrode is soaked with the first phosphoric acid solution. In this application, the electrode material includes substances in a positive electrode active material layer and a negative electrode active material layer, for example, includes at least one of a positive electrode active material and a negative electrode active material, and may further include at least one of a conductive agent and a binder. A phosphate positive electrode active material is usually in the positive electrode of the battery. Therefore, the positive electrode obtained by disassembling the spent battery can be used in the above operation. In an implementation of this application, discharging is further included before disassembling of the spent battery. In an implementation of this application, the electrode or the battery core includes the phosphate positive electrode active material. Thus, the method provided in this application can achieve recycling of the phosphate positive electrode active material, and is conducive to reuse of the phosphate positive electrode active material. In an embodiment of this application, the phosphate positive electrode active material includes at least one of lithium iron phosphate and lithium manganese iron phosphate.

In an implementation of this application, the concentration of the first phosphoric acid solution is 1 wt.% to 10 wt.%. That the concentration of the first phosphoric acid solution is 1 wt.% to 10 wt.% means that a mass content of phosphoric acid in the first phosphoric acid solution is 1 wt.% to 10 wt.%. Specifically, the concentration of the first phosphoric acid solution may be but is not limited to 1 wt.%, 2 wt.%, 3 wt.%, 4 wt.%, 5 wt.%, 6 wt.%, 7 wt.%, 8 wt.%, 9 wt.%, 10 wt.%, or the like. Using the first phosphoric acid solution with such a concentration not only ensures efficient separation of the phosphate positive electrode active material, but also avoids introduction of other impurity elements such as Al and Cu in the current collector. In an embodiment, the concentration of the first phosphoric acid solution is 1 wt.% to 5 wt.%. In another embodiment, the concentration of the first phosphoric acid solution is 5 wt.% to 10 wt.%. In still another embodiment, the concentration of the first phosphoric acid solution is 3 wt.% to 8 wt.%.

In an implementation of this application, time for soaking the electrode or the battery core in the first phosphoric acid solution is 1 h to 20 h, so that the lithium iron phosphate is fully separated from the current collector, a recycling rate of the lithium iron phosphate is improved, and preparation efficiency is ensured. Specifically, the time for soaking the electrode or the battery core in the first phosphoric acid solution may be but is not limited to 1 h, 2 h, 3 h, 4 h, 5 h, 6 h, 7 h, 8 h, 9 h, 13 h, 15 h, 18 h, 20 h, or the like. In an embodiment, the time for soaking the electrode or the battery core in the first phosphoric acid solution is 1 h to 5 h. In another embodiment, the time for soaking the electrode or the battery core in the first phosphoric acid solution is 5 h to 20 h. In still another embodiment, the time for soaking the electrode or the battery core in the first phosphoric acid solution is 3 h to 8 h. In an implementation of this application, a temperature at which the electrode or the battery core is soaked in the first phosphoric acid solution is 20°C to 30°C, thereby ensuring that the electrode material is fully separated from the current collector and improving a recycling rate. Specifically, the temperature at which the electrode or the battery core is soaked in the first phosphoric acid solution may be but is not limited to 20°C, 22°C, 25°C, 28°C, 30°C, or the like. In an embodiment, the temperature at which the electrode or the battery core is soaked in the first phosphoric acid solution is 20°C to 25°C. In another embodiment, the temperature at which the electrode or the battery core is soaked in the first phosphoric acid solution is 25°C to 30°C. In an embodiment of this application, that an electrode or a battery core is soaked in a first phosphoric acid solution includes: the electrode or the battery core is soaked in the first phosphoric acid solution under a condition of 20°C to 30°C for 1 h to 20 h.

In an embodiment of this application, the concentration of the first phosphoric acid solution is 1 wt.% to 5 wt.%, the time for soaking the electrode or the battery core in the first phosphoric acid solution is 5 h to 20 h, and the soaking temperature is 20°C to 25°C. In another embodiment of this application, the concentration of the first phosphoric acid solution is 5 wt.% to 10 wt.%, the time for soaking the electrode or the battery core in the first phosphoric acid solution is 1 h to 5 h, and the soaking temperature is 25°C to 30°C. In still another embodiment of this application, the concentration of the first phosphoric acid solution is 3 wt.% to 8 wt.%, the time for soaking the electrode or the battery core in the first phosphoric acid solution is 1 h to 20 h, and the soaking temperature is 20°C to 30°C.

In this application, the concentration of the first phosphoric acid solution used during soaking can be set as needed, provided that the electrode can be completely soaked in the first phosphoric acid solution. After filtering, the electrode material and a filter residue are obtained. The electrode material may include but is not limited to the phosphate positive electrode active material. The filter residue may be but is not limited to the current collector (such as an aluminum foil or a copper foil), the separator, or the like. It will be understood that a hole size of a sieve selected for filtering in this case is relatively large, provided that the hole size is less than a size of the current collector or the separator and greater than a size of the electrode material. In an embodiment, the hole size of the sieve is greater than or equal to 0.1 mm. For example, the hole size of the sieve is greater than or equal to 0.2 mm, 0.3 mm, 0.5 mm, 0.7 mm, 1 mm, or the like.

In S102, the second phosphoric acid solution is concentrated phosphoric acid, which can react with the phosphate positive electrode active material in the electrode material to generate ions containing phosphorus, iron, and lithium and dissolve the ions in the solution. A component other than the phosphate positive electrode active material in the electrode material can be removed through filtering. For example, a conductive agent or the like does not react with the second phosphoric acid solution, is still in a granular form, and cannot be dissolved in the solution. A particulate matter can be removed through filtering, to obtain the first filtrate.

In an implementation of this application, an excess amount of the second phosphoric acid solution is added to the electrode material to provide an acidic environment, thereby ensuring that the phosphate positive electrode active material in the electrode material is completely decomposed and improving a recycling rate. In an embodiment of this application, a molar ratio of phosphoric acid in the second phosphoric acid solution to lithium iron phosphate in the electrode material is greater than or equal to 3. Before the second phosphoric acid solution is added to the electrode material, the phosphate positive electrode active material in the electrode material is a solid particle. Therefore, a mass of the phosphate positive electrode active material in the electrode material can be obtained through detection, and then an addition amount of the second phosphoric acid solution can be obtained. The above range ensures that the second phosphoric acid solution is in excess, so that the phosphate positive electrode active material reacts completely, and the recycling rate is improved. In an embodiment, a molar ratio of the phosphoric acid in the second phosphoric acid solution to the phosphate positive electrode active material in the electrode material is (3-10): 1. The above molar ratio ensures that the second phosphoric acid solution is in excess, avoids occurrence of a side reaction, and reduces costs of subsequent removal of the phosphoric acid. Specifically, the molar ratio of the phosphoric acid in the second phosphoric acid solution to the phosphate positive electrode active material in the electrode material may be but is not limited to 3:1, 4:1, 5:1, 6:1, 7:1, 8:1, 9:1, 10:1, or the like.

In an implementation of this application, the concentration of the second phosphoric acid solution is 10 wt.% to 85 wt.%. That the concentration of the second phosphoric acid solution is 10 wt.% to 85 wt.% means that a mass content of the phosphoric acid in the second phosphoric acid solution is 10 wt.% to 85 wt.%. This is conducive to a full reaction between the second phosphoric acid solution and the phosphate positive electrode active material, and avoids occurrence of a side reaction caused by an excessive concentration. Specifically, the concentration of the second phosphoric acid solution may be but is not limited to 10 wt.%, 20 wt.%, 30 wt.%, 40 wt.%, 50 wt.%, 60 wt.%, 70 wt.%, 80 wt.%, 85 wt.%, or the like. In an embodiment, the concentration of the second phosphoric acid solution is 10 wt.% to 50 wt.%. In another embodiment, the concentration of the second phosphoric acid solution is 40 wt.% to 80 wt.%. In still another embodiment, the concentration of the second phosphoric acid solution is 25 wt.% to 65 wt.%.

In an implementation of this application, the electrode material is soaked in the second phosphoric acid solution, and filtering is performed after maintenance at 50°C to 100°C (for example, 50°C, 65°C, 70°C, 80°C, 90°C, or 100°C) for 3 h to 10 h (for example, 3 h, 4 h, 5 h, 6 h, 7 h, 8 h, 9 h, or 10 h) to obtain the first filtrate. The concentration of the second phosphoric acid solution is 10 wt.% to 50 wt.% (for example, 10 wt.%, 20 wt.%, 35 wt.%, 40 wt.%, or 50 wt.%). In this case, the second phosphoric acid solution is concentrated phosphoric acid with a relatively low concentration, and can react at a relatively high reaction temperature for relatively long reaction time, thereby ensuring full reaction and dissolution of the phosphate positive electrode active material and improving a recycling rate. In an embodiment, the electrode material is soaked in the second phosphoric acid solution and filtering is performed after maintenance at 50°C to 75°C for 7 h to 10 h to obtain the first filtrate. The concentration of the second phosphoric acid solution is 10 wt.% to 25 wt.%. In another embodiment, the electrode material is soaked in the second phosphoric acid solution and filtering is performed after maintenance at 60°C to 90°C for 4 h to 8 h to obtain the first filtrate. The concentration of the second phosphoric acid solution is 20 wt.% to 40 wt.%. In still another embodiment, the electrode material is soaked in the second phosphoric acid solution and filtering is performed after maintenance at 75°C to 100°C for 3 h to 5 h to obtain the first filtrate. The concentration of the second phosphoric acid solution is 25 wt.% to 50 wt.%. In another implementation of this application, the electrode material is soaked in the second phosphoric acid solution, and filtering is performed after maintenance at 25°C to 50°C (for example, 25°C, 30°C, 35°C, 40°C, 45°C, or 50°C) for 0.5 h to 5 h (for example, 0.5 h, 1 h, 2 h, 3 h, 4 h, or 5 h) to obtain the first filtrate. The concentration of the second phosphoric acid solution is 50 wt.% to 85 wt.% (for example, 50 wt.%, 60 wt.%, 70 wt.%, 80 wt.%, or 85 wt.%). In this case, the second phosphoric acid solution is concentrated phosphoric acid with a relatively high concentration, and can react at a relatively low reaction temperature for relatively short reaction time, thereby ensuring full reaction and dissolution of the phosphate positive electrode active material and improving a recycling rate. In an embodiment, the electrode material is soaked in the second phosphoric acid solution and filtering is performed after maintenance at 35°C to 45°C for 3 h to 5 h to obtain the first filtrate. The concentration of the second phosphoric acid solution is 50 wt.% to 65 wt.%. In another embodiment, the electrode material is soaked in the second phosphoric acid solution and filtering is performed after maintenance at 25°C to 35°C for 1 h to 4 h to obtain the first filtrate. The concentration of the second phosphoric acid solution is 65 wt.% to 75 wt.%. In still another embodiment, the electrode material is soaked in the second phosphoric acid solution and filtering is performed after maintenance at 40°C to 50°C for 0.5 h to 2 h to obtain the first filtrate. The concentration of the second phosphoric acid solution is 75 wt.% to 85 wt.%. In the above reaction process, the electrode material and the second phosphoric acid solution can be mixed and react fully through heating and stirring. In an implementation of this application, the first filtrate includes lithium ions, ferrous ions, and phosphate ions. In an embodiment, the electrode material is soaked in the second phosphoric acid solution and filtering is performed after maintenance at 25°C to 100°C for 0.5 h to 5 h to obtain the first filtrate. The concentration of the second phosphoric acid solution is 85 wt.%. A concentration of the ferrous ion in the first filtrate is 0.5 mol/L to 3 mol/L.

In S103, the electrode material reacts with the second phosphoric acid solution to ensure full dissolution of lithium iron phosphate. Thus, the first iron source is added to the first filtrate obtained through filtering, and the first iron source can neutralize an excess second phosphoric acid solution in the first filtrate to ensure recycling of the phosphate positive electrode active material.

In an implementation of this application, the first iron source includes at least one of elemental iron, ferric oxide, ferroferric oxide, and ferrous oxalate. The first iron source can react with the second phosphoric acid solution to neutralize the excess second phosphoric acid solution in the first filtrate. In an embodiment of this application, the first iron source includes elemental iron. The elemental iron can not only react with the second phosphoric acid solution, but also make the filtrate in a reducing state, thereby preventing the ferrous ion in the filtrate from being oxidized. In addition, the elemental iron is cheap, which greatly reduces recycling costs. In this application, the elemental iron may be but is not limited to iron powder, sheet iron, a ferrophosphorus slag, or the like. In an embodiment, a particle size D50 of the iron powder may be 5 µm to 25 µm. Using the iron powder within such a particle size range is conducive to uniform dispersion in the first filtrate, thereby further fully neutralizing the second phosphoric acid solution in the first filtrate and ensuring a reducing state of the solution. Specifically, the particle size D50 of the iron powder may be but is not limited to 5 µm, 8 µm, 10 µm, 12 µm, 15 µm, 17 µm, 20 µm, 23 µm, 25 µm, or the like.

In this application, an excess first iron source may be added to ensure full neutralization of the second phosphoric acid solution. In an implementation of this application, a molar ratio of the first iron source to the phosphoric acid in the second phosphoric acid solution is greater than 0.5. In an embodiment, the molar ratio of the first iron source to the phosphoric acid in the second phosphoric acid solution is greater than or equal to 1. In an implementation of this application, the first iron source is added to the first filtrate and filtering is performed after maintenance at 25°C to 90°C (for example, 25°C, 30°C, 50°C, 70°C, 80°C, 90°C) for 1 h to 5 h (for example, 1 h, 2 h, 3 h, 4 h, or 5 h) to obtain the second filtrate. In an embodiment, the first iron source is added to the first filtrate and filtering is performed after maintenance at 25°C to 55°C for 3 h to 5 h, to obtain the second filtrate. In another embodiment, the first iron source is added to the first filtrate and filtering is performed after maintenance at 50°C to 90°C for 1 h to 3 h, to obtain the second filtrate. In still another embodiment, the first iron source is added to the first filtrate and filtering is performed after maintenance at 35°C to 80°C for 2 h to 4 h, to obtain the second filtrate.

In this application, the second filtrate includes the lithium ions, the ferrous ions, and the phosphate ions, and can be used to prepare the phosphate positive electrode active material, such as lithium iron phosphate, to achieve recycling of the phosphate positive electrode active material.

FIG. 2 is a flowchart of a method for recycling battery material according to another implementation of this application, including the following:

S201: an electrode or a battery core is soaked in a first phosphoric acid solution for separation to obtain an electrode material. A concentration of the first phosphoric acid solution is less than 10 wt.%.

S202: the electrode material is soaked in a second phosphoric acid solution and filtering is performed to obtain a first filtrate. A concentration of the second phosphoric acid solution is greater than or equal to 10 wt.%.

S203: a first iron source is added to the first filtrate and filtering is performed after reaction to obtain a second filtrate. The second filtrate has lithium ions, ferrous ions, and phosphate ions.

S204: after a molar ratio of the lithium ion to the ferrous ion to the phosphate ion in the second filtrate is adjusted, a phosphate positive electrode active material is obtained through spray drying and sintering.

In this application, lithium iron phosphate can be obtained through a wet process by adjusting a molar ratio of lithium to iron to phosphorus in the second filtrate.

For S201, S202, and S203, refer to the above descriptions in S101, S102, and S103. Details are not described herein again.

In S204, the molar ratio of the lithium ion to the ferrous ion to the phosphate ion in the second filtrate is adjusted, which is conducive to preparation of the phosphate positive electrode active material. For example, lithium iron phosphate can be prepared. In an implementation of this application, a molar ratio of the lithium ion to the ferrous ion in the second filtrate is adjusted to 1.03 to 1.05, and a molar ratio of the phosphate ion to the ferrous ion in the second filtrate is adjusted to 1.1 to 1.3, which is further conducive to preparation of the phosphate positive electrode active material. Specifically, the molar ratio of the lithium ion to the ferrous ion in the second filtrate is adjusted to 1.03, 1.035, 1.04, 1.045, 1.05, or the like, and the molar ratio of the phosphate ion to the ferrous ion in the second filtrate is adjusted to 1.1, 1.15, 1.2, 1.25, 1.3, or the like. In an embodiment, the molar ratio of the lithium ion to the ferrous ion to the phosphate ion in the second filtrate is adjusted to (1.03-1.05):1:(1.1-1.3).

In this application, the molar ratio of the lithium ion to the ferrous ion to the phosphate ion in the second filtrate can be adjusted by adding a lithium source, a third iron source, and a phosphorus source. In an embodiment, the lithium source is a soluble lithium source, the third iron source is a soluble iron source, and the phosphorus source is a soluble phosphorus source. Specifically, the lithium source may include but is not limited to at least one of lithium hydroxide and lithium phosphate, the third iron source may include but is not limited to ferrous phosphate or ferrous oxalate, and the phosphorus source may include but is not limited to at least one of lithium phosphate and ferrous phosphate. Selecting the above lithium source, third iron source, and phosphorus source not only can adjust the molar ratio of the ions in the second filtrate, but also does not introduce other impurity elements or impurity ions, thereby ensuring purity and performance of the recycled phosphate positive electrode active material.

In an implementation of this application, a temperature of the spray drying is greater than 140°C, thereby ensuring preparation of lithium iron phosphate. Specifically, the temperature of the spray drying may be but is not limited to being greater than 140°C, 150°C, 160°C, 170°C, or the like. In an implementation of this application, the sintering includes sintering at 550°C to 750°C for 2 h to 10 h, thereby ensuring preparation of the phosphate positive electrode active material and helping improve electrochemical performance of the phosphate positive electrode active material. Specifically, a temperature of the sintering may be but is not limited to 570°C, 600°C, 630°C, 650°C, 670°C, 680°C, 690°C, 700°C, 715°C, 730°C, 750°C, or the like, and time for the sintering may be but is not limited to 2 h, 4 h, 5 h, 7 h, 8 h, 10 h, or the like. In an embodiment, the sintering is performed under an inert atmosphere to ensure preparation of the phosphate positive electrode active material. Specifically, an inert gas may be but is not limited to nitrogen, argon, or the like. In this application, when the electrode material of the electrode includes an organic matter such as a binder or an organic matter is added in a preparation process, the organic matter decomposes or volatilizes in a sintering process, thereby avoiding impact on performance of the phosphate positive electrode active material.

In an implementation of this application, before the spray drying, the following is further included: A carbon source is added to the second filtrate. A conductivity of the phosphate positive electrode active material is improved by adding the carbon source, which is conducive to use of the phosphate positive electrode active material in a battery. In an embodiment, an addition amount of the carbon source is 5% to 20% of a mass of the phosphate positive electrode active material in the second filtrate. In other words, after the molar ratio of the lithium ion to the ferrous ion to the phosphate ion in the second filtrate is adjusted, the carbon source is added to the second filtrate, and the addition amount of the carbon source is 5% to 20% of the mass of the phosphate positive electrode active material in the second filtrate. It will be understood that after the molar ratio of the lithium ion to the ferrous ion to the phosphate ion in the second filtrate is adjusted, masses of the lithium ions, the ferrous ions, and the phosphate ions in the adjusted second filtrate can be obtained through detection, thereby obtaining the mass of the phosphate positive electrode active material in the second filtrate, and then adding an appropriate amount of carbon source accordingly. Adding the carbon source based on the above addition amount not only can significantly improve the conductivity of the phosphate positive electrode active material, thereby improving electrochemical performance of a battery prepared therefrom, but also does not affect performance of the phosphate positive electrode active material. Specifically, the addition amount of the carbon source is 5%, 8%, 10%, 12%, 15%, 17%, 18%, 20%, or the like of the mass of the phosphate positive electrode active material in the second filtrate. In an embodiment, the carbon source may include but is not limited to at least one of glucose, sucrose, maltose, starch, lactose, polyethylene glycol, polyvinyl alcohol, and citric acid. In an embodiment, the carbon source is added to the second filtrate and stirring is performed for 0.5 h to 2 h, so that the carbon source is fully dispersed and homogenized. Specifically, stirring time may be but is not limited to 0.5 h, 1 h, 1.5 h, 2 h, or the like.

In this application, the phosphate positive electrode active material recycled through a wet process has a small particle size, good low-temperature performance, and excellent rate performance, which is conducive to reuse of the phosphate positive electrode active material in a battery. In an implementation of this application, the particle size of the phosphate positive electrode active material is at a nanoscale, which is conducive to use of the phosphate positive electrode active material in the battery and improves electrochemical performance of the battery. In an embodiment, the particle size of the phosphate positive electrode active material is 30 nm to 100 nm. Specifically, the particle size of the phosphate positive electrode active material may be but is not limited to 30 nm, 40 nm, 50 nm, 60 nm, 80 nm, 95 nm, or the like.

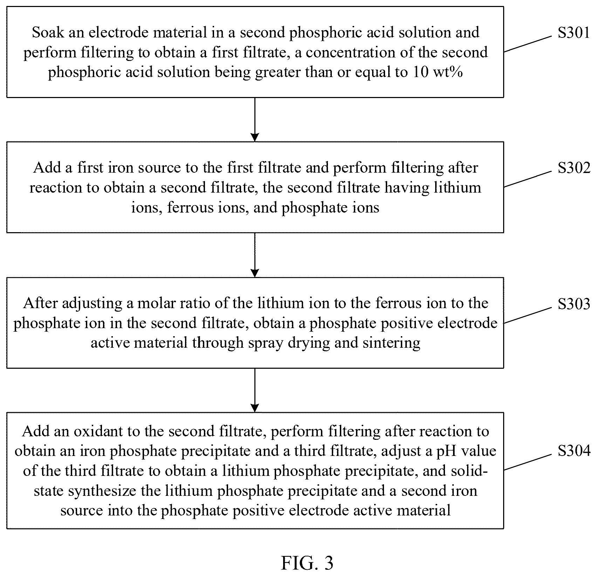

FIG. 3 is a flowchart of a method for recycling battery material according to still another implementation of this application, including the following:
S301: an electrode material is soaked in a second phosphoric acid solution and filtering is performed to obtain a first filtrate. A concentration of the second phosphoric acid solution is greater than or equal to 10 wt.%.

S302: a first iron source is added to the first filtrate and filtering is performed after reaction to obtain a second filtrate. The second filtrate has lithium ions, ferrous ions, and phosphate ions.

S303: after a molar ratio of the lithium ion to the ferrous ion to the phosphate ion in the second filtrate is adjusted, a phosphate positive electrode active material is obtained through spray drying and sintering.

S304: an oxidant is added to the second filtrate, filtering is performed after reaction to obtain an iron phosphate precipitate and a third filtrate, a pH value of the third filtrate is adjusted to obtain a lithium phosphate precipitate, and the lithium phosphate precipitate and a second iron source are solid-state synthesized into the phosphate positive electrode active material.

In this application, the second filtrate can be used to obtain the phosphate positive electrode active material according to a solid-state synthesis method, to achieve recycling of the phosphate positive electrode active material.

For S301, S302, and S303, refer to the above descriptions in S101, S102, and S103. Details are not described herein again.

In S304, the oxidant is added to the second filtrate to convert the ferrous ion into a ferric ion, which forms the iron phosphate precipitate with the phosphate ion in the filtrate. The third filtrate obtained through filtering includes the lithium ion and the phosphate ion. The pH value of the third filtrate is adjusted to generate the lithium phosphate precipitate, and the phosphate positive electrode active material is synthesized using the lithium phosphate precipitate. In this application, the second iron source includes at least one of the iron phosphate precipitate, ferric oxide, and ferrous oxalate. In an embodiment, the lithium phosphate precipitate and the iron phosphate precipitate can be solid-state synthesized into the phosphate positive electrode active material, thereby reducing production costs and improving utilization. In addition, the solid-state synthesized phosphate positive electrode active material has high compaction density and high energy density, which is conducive to use of the phosphate positive electrode active material in a battery.

In this application, the oxidant may be selected from any type of oxidants. In an implementation of this application, a concentration of the oxidant is 10% to 50%, which is conducive to efficient and rapid generation of the iron phosphate precipitate. Specifically, the concentration of the oxidant may be but is not limited to 10%, 20%, 30%, 40%, 50%, or the like. In an implementation of this application, the oxidant includes hydrogen peroxide. The hydrogen peroxide is used for oxidation, so that the iron phosphate precipitate can be obtained, excess hydrogen peroxide in the filtrate is removed during solid-state synthesis, and no impurity element is introduced into the phosphate positive electrode active material, which is conducive to improving performance of the phosphate positive electrode active material.

In an implementation of this application, an alkaline solution is used to adjust the pH value of the third filtrate to be greater than 7 to generate the lithium phosphate precipitate. In an embodiment, the alkaline solution may include but is not limited to at least one of lithium hydroxide and ammonium hydroxide.

In an implementation of this application, that the lithium phosphate precipitate and a second iron source are solid-state synthesized into the phosphate positive electrode active material includes that under a reducing atmosphere (for example, hydrogen), reaction is performed on the lithium phosphate precipitate and the second iron source at 200°C to 400°C for 1 h to 5 h, and then reaction is performed at 550°C to 750°C for 5 h to 10 h, to obtain the phosphate positive electrode active material. In another implementation of this application, that the lithium phosphate precipitate and a second iron source are solid-state synthesized into the phosphate positive electrode active material includes that under a reducing atmosphere, the lithium phosphate precipitate and the second iron source are first heated up to 550°C to 750°C, and then reaction is performed on the lithium phosphate precipitate and the second iron source at 550°C to 750°C for 5 h to 10 h, to obtain the phosphate positive electrode active material. A rate of the heating up is 2°C/min to 10°C/min. In still another implementation of this application, that the lithium phosphate precipitate and a second iron source are solid-state synthesized into the phosphate positive electrode active material includes that the lithium phosphate precipitate, the second iron source, and a carbon source are mixed, reaction is performed at 200°C to 400°C for 1 h to 5 h, and then reaction is performed at 550°C to 750°C for 5 h to 10 h, to obtain the phosphate positive electrode active material.

In an implementation of this application, when the lithium phosphate precipitate and the second iron source are solid-state synthesized into the phosphate positive electrode active material, the carbon source may be further added to improve a conductivity of the prepared phosphate positive electrode active material. In an embodiment, an addition amount of the carbon source is 5% to 20% of a mass of the lithium phosphate precipitate. Not only the conductivity of the phosphate positive electrode active material can be significantly improved, thereby improving electrochemical performance of a battery prepared therefrom, but also performance of the phosphate positive electrode active material is not affected. Specifically, the addition amount of the carbon source is 5%, 7%, 10%, 12%, 15%, 16%, 18%, 20%, or the like of the mass of the lithium phosphate precipitate. In an embodiment, the carbon source may include but is not limited to at least one of glucose, sucrose, maltose, starch, lactose, polyethylene glycol, polyvinyl alcohol, and citric acid.

In an implementation of this application, the electrode or the battery core is soaked in the first phosphoric acid solution for separation to obtain the electrode material. The concentration of the first phosphoric acid solution is less than 10 wt.%. The electrode material is soaked in the second phosphoric acid solution, and filtering is performed to obtain the first filtrate. The concentration of the second phosphoric acid solution is greater than or equal to 10 wt.%. The first iron source is added to the first filtrate, and filtering is performed after reaction to obtain the second filtrate. After a molar ratio of lithium to iron to phosphorus in a part of the second filtrate is adjusted, the phosphate positive electrode active material is obtained through spray drying and sintering. In addition, the oxidant is added to another part of the second filtrate, and filtering is performed after reaction to obtain the iron phosphate precipitate and the third filtrate. The pH value of the third filtrate is adjusted to obtain the lithium phosphate precipitate, and the lithium phosphate precipitate and the second iron source are solid-state synthesized into the phosphate positive electrode active material. In this implementation, the phosphate positive electrode active material is prepared according to a wet process and a solid-state method. The method provided in this application can implement mutual switching between the wet process and the solid-state method, thereby improving convenience of production.

In an implementation of this application, the molar ratio of lithium to iron to phosphorus in the phosphate positive electrode active material is (1.01-1.05):1:(1.015-1.036) to ensure performance of the phosphate positive electrode active material. Specifically, the molar ratio of lithium to iron to phosphorus in the phosphate positive electrode active material may be but is not limited to 1.01:1:1.036, 1.05:1:1.015, 1.02:1:1.02, 1.03:1:1.03, 1.04:1:1.025, or the like.

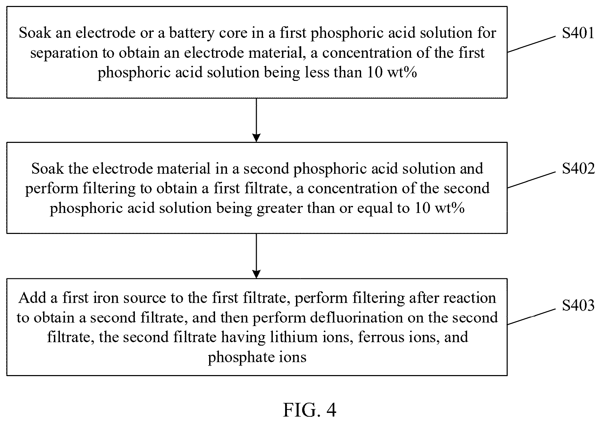

FIG. 4 is a flowchart of a method for recycling battery material according to still another implementation of this application, including the following:
S401: an electrode or a battery core is soaked in a first phosphoric acid solution for separation to obtain an electrode material. A concentration of the first phosphoric acid solution is less than 10 wt.%.

S402: the electrode material is soaked in a second phosphoric acid solution and filtering is performed to obtain a first filtrate. A concentration of the second phosphoric acid solution is greater than or equal to 10 wt.%.

S403: a first iron source is added to the first filtrate, filtering is performed after reaction to obtain a second filtrate, and then defluorination is performed on the second filtrate. The second filtrate has lithium ions, ferrous ions, and phosphate ions.

For S401 and S402, refer to the above descriptions in S101 and S102. Details are not described herein again.

In S403, defluorination is performed on the second filtrate, to reduce a content of fluoride ions in the second filtrate, thereby improving performance of a recycled phosphate positive electrode active material and avoiding impact of the fluoride ions on an environment. In an implementation of this application, the second filtrate can be mixed with a defluorination agent, and filtering may be performed after stirring. The defluorination agent may be a defluorination resin or the like. It will be understood that the defluorination agent obtained through filtering can be recycled after cleaning, thereby reducing production costs. In an implementation of this application, a fluoride ion concentration of the second filtrate after the defluorination is less than or equal to 10 ppm. This can improve performance of the recycled phosphate positive electrode active material. Specifically, the fluoride ion concentration of the second filtrate after the defluorination may be but is not limited to being less than or equal to 1 ppm, 3 ppm, 5 ppm, 8 ppm, 10 ppm, or the like. In an embodiment, after the defluorination, the fluoride ion concentration of the second filtrate is 0. In an implementation of this application, defluorination may be performed before a molar ratio of the lithium ion to the ferrous ion to the phosphate ion in the second filtrate is adjusted, or defluorination may be performed after a molar ratio of the lithium ion to the ferrous ion to the phosphate ion in the second filtrate is adjusted.

In an implementation of this application, filtering is performed after the electrode material is soaked in the second phosphoric acid solution, to obtain the first filtrate and a graphite residue; the graphite residue and asphalt are mixed to obtain a mixed product; and second sintering is performed on the mixed product to obtain graphite. Recycling the graphite residue in the electrode material improves a recycling rate of a battery material, especially a negative electrode active material, and improves production benefit.

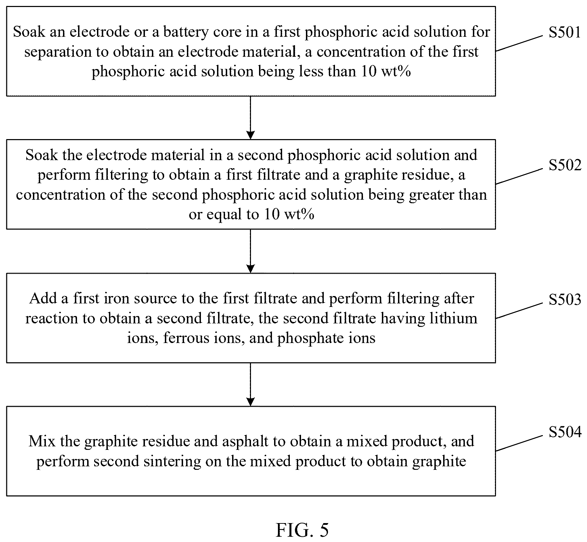

FIG. 5 is a flowchart of a method for recycling battery material according to still another implementation of this application, including the following:
S501: an electrode or a battery core is soaked in a first phosphoric acid solution for separation to obtain an electrode material. A concentration of the first phosphoric acid solution is less than 10 wt.%.

S502: the electrode material is soaked in a second phosphoric acid solution and filtering is performed to obtain a first filtrate and a graphite residue. A concentration of the second phosphoric acid solution is greater than or equal to 10 wt.%.

S503: a first iron source is added to the first filtrate and filtering is performed after reaction to obtain a second filtrate. The second filtrate has lithium ions, ferrous ions, and phosphate ions.

S504: the graphite residue and asphalt are mixed to obtain a mixed product, and second sintering is performed on the mixed product to obtain graphite.

For S501 and S503, refer to the above descriptions in S101 and S103. Details are not described herein again.

In S502, the graphite is usually on a negative electrode. Therefore, a positive electrode and the negative electrode can be treated together using the first phosphoric acid solution. In this case, the electrode material containing the graphite residue in the negative electrode is separated from a current collector in the negative electrode. After filtering, the graphite residue is in the electrode material. Then, after the second phosphoric acid solution is added, the graphite is insoluble in phosphoric acid and therefore is in a solid state, and can be separated from the first filtrate through filtering. In an embodiment, a solid content of the graphite residue is greater than or equal to 60% (for example, 60%, 61%, 64%, or 68%). In an embodiment, a hole size of a sieve used for filtering here is relatively small, and may be 50 µm to 60 µm, to ensure separation of the graphite residue and the first filtrate. Specifically, filter pressing is used here for filtering, to separate the graphite residue from the first filtrate. In an embodiment, pressure of the filter pressing may be 0.1 MPa to 3 MPa.

In S504, the graphite residue and the asphalt are mixed and then sintered to obtain the graphite, which can be used again in a battery, thereby achieving recycling of the graphite.

In an implementation of this application, the graphite residue can be further pretreated before the graphite residue and the asphalt are mixed. The pretreatment includes washing and drying (such as flash evaporation) the graphite residue to remove impurities on a surface of the graphite residue and improve purity of a prepared graphite product. In an embodiment, the graphite residue may be added to water for washing, pH of a formed mixed slurry is greater than or equal to 4 (for example, 4, 4.3, 4.5, 5, or the like), and then drying may be performed.

In an implementation of this application, a mass ratio of the graphite residue to the asphalt may be 1:(0.03-0.05). This can improve a rate of coating graphite particles in the graphite residue with the asphalt in a mixing process, improve performance of the graphite after the second sintering, and help improve electrochemical performance of the battery. Specifically, the mass ratio of the graphite residue to the asphalt may be but is not limited to 1:0.03, 1:0.035, 1:0.04, 1:0.045, 1:0.05, or the like. In this application, the asphalt may be but is not limited to high-temperature asphalt, low-temperature asphalt, or the like.

In this application, mixing of the graphite residue and the asphalt may be but is not limited to being performed in a kneader. In an implementation of this application, a mixing temperature may be 200°C to 280°C, and mixing time may be 2 h to 20 h, to ensure that the graphite residue and the asphalt are mixed uniformly. Specifically, the mixing temperature may be but is not limited to 200°C, 230°C, 250°C, 260°C, 280°C, or the like, and the mixing time may be but is not limited to 2 h, 5 h, 8 h, 10 h, 13 h, 15 h, 17 h, 19 h, or the like.

In this application, the second filtrate is sintered to obtain the phosphate positive electrode active material, and the sintering in this case is first sintering. The mixed product is sintered to obtain the graphite, and the sintering in this case is second sintering.

In an implementation of this application, the second sintering includes sintering at 1000°C to 1800°C for 3 h to 12 h, thereby ensuring preparation of the graphite and helping improve electrochemical performance of the graphite. Specifically, a temperature of the second sintering may be but is not limited to 1000°C, 1200°C, 1300°C, 1500°C, 1700°C, 1800°C, or the like, and time for the second sintering may be but is not limited to 3 h, 5 h, 7 h, 8 h, 10 h, 11 h, 12 h, or the like. In an embodiment, the second sintering is performed under an inert atmosphere to ensure preparation of the graphite. Specifically, an inert gas may be but is not limited to nitrogen, argon, or the like.

In an implementation of this application, filtering is performed after the electrode material is soaked in the second phosphoric acid solution, to obtain the first filtrate and the graphite residue; the graphite residue and the asphalt are mixed at 200°C to 280°C for 2 h to 20 h, to obtain the mixed product; and heat treatment is performed on the mixed product at 1000°C to 1800°C for 3 h to 12 h under an inert atmosphere, to obtain the graphite. In this way, a graphite product with excellent performance can be obtained.

In a related art, sodium hydroxide is usually used to treat an electrode to remove a current collector. However, this process causes a loss of a large amount of lithium and introduces sodium ions, affecting purity and quality of a recycled phosphate positive electrode active material, and further affecting charging and discharging performance of a battery. The method used in this application avoids introduction of another element, so that not only a recycling rate of the phosphate positive electrode active material is improved, but also purity and performance of the phosphate positive electrode active material are improved, which is conducive to use of the phosphate positive electrode active material in a battery. In addition, the method is easy to operate, has a simple process, does not require a large-scale device, has low costs, and can implement industrial production.

Effects of the technical solutions of this application are further described below via specific examples.

### Example 1

A battery core is obtained after discharging and disassembling of a spent lithium iron phosphate battery. After being disassembled, the battery core is soaked in dilute phosphoric acid (a phosphoric acid concentration of the dilute phosphoric acid is 3 wt.%) at 25°C for 1 h. All electrode plates are completely soaked. After the soaking, an electrode material is obtained through a 50-mesh sieve, and an aluminum foil, a copper foil, or a separator is obtained from oversize materials.

Concentrated phosphoric acid (a phosphoric acid concentration of the concentrated phosphoric acid is 85 wt.%) is added to the electrode material, and a molar ratio of phosphoric acid in the concentrated phosphoric acid to lithium iron phosphate in the electrode material is 3:1. Heating and stirring are performed at 100°C for 5 h to completely dissolve the lithium iron phosphate. In this case, a ferrous ion concentration is 3 mol/L. Then, filter pressing is performed, with diaphragm pressure being 0.9 MPa, to obtain a first filtrate and a graphite residue (a solid content is 64%). The first filtrate is a dissolved lithium iron phosphate solution.

Iron powder with a particle size D50 of 5 µm is added to the first filtrate, and a molar ratio of the iron powder to the phosphoric acid in the concentrated phosphoric acid added to the electrode material is 1:1. Heating and stirring are performed at 90°C for 1 h. Then, filtering is performed to obtain a second filtrate. A filter residue is unreacted iron powder, and the second filtrate is neutralized lithium iron phosphate solution.

A defluorination agent is added to the second filtrate, and then filtering is performed, so that a fluoride ion concentration of the filtrate is 10 ppm. The defluorination agent after filtering is backwashed and recycled for reutilization.

### Example 2

A battery core is obtained after discharging and disassembling of a spent lithium iron phosphate battery. After being disassembled, the battery core is soaked in dilute phosphoric acid (a phosphoric acid concentration of the dilute phosphoric acid is 3wt.%) at 25°C for 1 h. All electrode plates are completely soaked. After the soaking, an electrode material is obtained through a 50-mesh sieve, and an aluminum foil, a copper foil, or a separator is obtained from oversize materials.

Concentrated phosphoric acid (a phosphoric acid concentration of the concentrated phosphoric acid is 85 wt.%) is added to the electrode material, and a molar ratio of phosphoric acid in the concentrated phosphoric acid to lithium iron phosphate in the electrode material is 3:1. Heating and stirring are performed at 45°C for 5 h to completely dissolve the lithium iron phosphate. In this case, a ferrous ion concentration is 3 mol/L. Then, filter pressing is performed, with diaphragm pressure being 0.9 MPa, to obtain a first filtrate and a graphite residue (a solid content is 64%). The first filtrate is a dissolved lithium iron phosphate solution.

Iron powder with a particle size D50 of 5 µm is added to the first filtrate, and a molar ratio of the iron powder to the phosphoric acid in the concentrated phosphoric acid added to the electrode material is 1:1. Heating and stirring are performed at 90°C for 1 h. Then, filtering is performed to obtain a second filtrate. A filter residue is unreacted iron powder, and the second filtrate is neutralized lithium iron phosphate solution.

A defluorination agent is added to the second filtrate, and then filtering is performed, so that a fluoride ion concentration of the filtrate is 10 ppm. The defluorination agent after filtering is backwashed and recycled for reutilization.

### Example 3

This example is substantially the same as Example 2. A difference lies in that defluorination is not performed.

### Example 4

This example is substantially the same as Example 2. A difference lies in that concentrated phosphoric acid (a concentration of phosphoric acid in the concentrated phosphoric acid is 20 wt.%) is added to the electrode material and then heating and stirring are performed at 55°C for 6 h.

### Example 5

This example is substantially the same as Example 2. A difference lies in that concentrated phosphoric acid (a concentration of phosphoric acid in the concentrated phosphoric acid is 55 wt.%) is added to the electrode material and then heating and stirring are performed at 35°C for 2 h.

### Example 6

A battery core is obtained after discharging and disassembling of a spent lithium iron phosphate battery. After being disassembled, the battery core is soaked in dilute phosphoric acid (a phosphoric acid concentration of the dilute phosphoric acid is 3 wt.%) at 25°C for 1 h. All electrode plates are completely soaked. After the soaking, an electrode material is obtained through a 50-mesh sieve, and an aluminum foil, a copper foil, or a separator is obtained from oversize materials.

Concentrated phosphoric acid (a phosphoric acid concentration of the concentrated phosphoric acid is 45 wt.%) is added to the electrode material, and a molar ratio of phosphoric acid in the concentrated phosphoric acid to lithium iron phosphate in the electrode material is 3:1. Heating and stirring are performed at 74°C for 3 h to completely dissolve the lithium iron phosphate. In this case, a ferrous ion concentration is 3 mol/L. Then, filter pressing is performed, with diaphragm pressure being 0.9 MPa, to obtain a first filtrate and a graphite residue (a solid content is 64%). The first filtrate is a dissolved lithium iron phosphate solution.

Iron powder with a particle size D50 of 5 µm is added to the first filtrate, and a molar ratio of the iron powder to the phosphoric acid in the concentrated phosphoric acid added to the electrode material is 1:1. Heating and stirring are performed at 90°C for 1 h. Then, filtering is performed to obtain a second filtrate. A filter residue is unreacted iron powder, and the second filtrate is neutralized lithium iron phosphate solution.

A defluorination agent is added to the second filtrate, and then filtering is performed, so that a fluoride ion concentration of the filtrate is 10 ppm. The defluorination agent after filtering is backwashed and recycled for reutilization.

### Example 7

This example is substantially the same as Example 2. A difference lies in that a molar ratio of phosphoric acid in concentrated phosphoric acid to lithium iron phosphate in the electrode material is 8:1.

### Example 8

This example is substantially the same as Example 2. A difference lies in that a molar ratio of phosphoric acid in concentrated phosphoric acid to lithium iron phosphate in the electrode material is 15:1.

### Example 9

This example is substantially the same as Example 2. A difference lies in that a concentration of phosphoric acid in dilute phosphoric acid is 8 wt.%.

### Example 10

An electrode plate is obtained after discharging and disassembling of a spent lithium iron phosphate battery. The electrode plate is soaked in dilute phosphoric acid (a phosphoric acid concentration of the dilute phosphoric acid is 9 wt.%) at 25°C for 10 h. All electrode plates are completely soaked. After the soaking, an electrode material is obtained through a 50-mesh sieve, and an aluminum foil or a copper foil is obtained from oversize materials.

Concentrated phosphoric acid (a phosphoric acid concentration of the concentrated phosphoric acid is 85 wt.%) is added to the electrode material, and a molar ratio of phosphoric acid in the concentrated phosphoric acid to lithium iron phosphate in the electrode material is 10:1. Heating and stirring are performed at 25°C for 0.5 h to completely dissolve the lithium iron phosphate. In this case, a ferrous ion concentration is 0.5 mol/L. Then, filter pressing is performed, with diaphragm pressure being 0.5 MPa, to obtain a first filtrate and a graphite residue (a solid content is 60%). The first filtrate is a dissolved lithium iron phosphate solution.

Iron powder with a particle size D50 of 25 µm is added to the first filtrate, and a molar ratio of the iron powder to the phosphoric acid in the concentrated phosphoric acid added to the electrode material is 1:1. Heating and stirring are performed at 25°C for 5 h. Then, filtering is performed to obtain a second filtrate. A filter residue is unreacted iron powder, and the second filtrate is neutralized lithium iron phosphate solution.

A defluorination agent is added to the second filtrate, and then filtering is performed, so that a fluoride ion concentration of the filtrate is 0 ppm. The defluorination agent after filtering is backwashed and recycled for reutilization.

### Example 11

Ion ratio adjustment is performed on the second filtrate after defluorination in Example 1, and an ion ratio is adjusted by adding lithium hydroxide and ferrous oxalate, to control a molar ratio of Li⁺ to Fe²⁺ in the filtrate to be 1.03:1, and a molar ratio of PO₄³⁻ to Fe²⁺ in the filtrate to be 1.3:1. After the adjustment, glucose is added for stirring. Stirring time is controlled to be 30 min. An addition amount of the glucose is 8% of a mass of lithium iron phosphate in the filtrate.

Spray drying is performed on the filtrate added with the glucose, and then sintering is performed at 650°C for 3 h under a nitrogen atmosphere, to obtain the lithium iron phosphate.

Pure water with a threefold weight is added to wash a graphite residue (a solid content is 64%), and final pH is 4.3. Then, flash drying is performed to obtain graphite powder. The graphite powder and high-temperature asphalt are placed in a kneader at a weight ratio of 1:0.05 and mixed at 200°C for 2 h to obtain a mixed product. The mixed product is sintered at 1000°C for 8 h under a nitrogen atmosphere to obtain graphite.

### Example 12

The same operations in Example 11 are performed on the second filtrate obtained after defluorination in Example 2, to obtain lithium iron phosphate and graphite.

### Example 13

The same operations in Example 11 are performed on the second filtrate in Example 3, to obtain lithium iron phosphate and graphite.

### Example 14

The same operations in Example 11 are performed on the second filtrate obtained after defluorination in Example 4, to obtain lithium iron phosphate and graphite.

### Example 15

The same operations in Example 11 are performed on the second filtrate obtained after defluorination in Example 5, to obtain lithium iron phosphate and graphite.

### Example 16

The same operations in Example 11 are performed on the second filtrate obtained after defluorination in Example 6, to obtain lithium iron phosphate and graphite.

### Example 17

The same operations in Example 11 are performed on the second filtrate obtained after defluorination in Example 7, to obtain lithium iron phosphate and graphite.

### Example 18

The same operations in Example 11 are performed on the second filtrate obtained after defluorination in Example 8, to obtain lithium iron phosphate and graphite.

### Example 19

The same operations in Example 11 are performed on the second filtrate obtained after defluorination in Example 9, to obtain lithium iron phosphate and graphite.

### Example 20

The same operations in Example 11 are performed on the second filtrate obtained after defluorination in Example 10, to obtain lithium iron phosphate and graphite.

### Example 21

Ion ratio adjustment is performed on the second filtrate after defluorination in Example 10, and an ion ratio is adjusted by adding lithium hydroxide and ferrous oxalate, to control a molar ratio of Li⁺ to Fe²⁺ in the filtrate to be 1.05:1, and a molar ratio of PO₄³⁻ to Fe²⁺ in the filtrate to be 1.1:1. After the adjustment, glucose is added for stirring. Stirring time is controlled to be 30 min. An addition amount of the glucose is 15% of a mass of lithium iron phosphate in the filtrate.

Spray drying is performed on the filtrate added with the glucose, and then sintering is performed at 750°C for 10 h under a nitrogen atmosphere, to obtain the lithium iron phosphate.

Pure water with a fourfold weight is added to wash a graphite residue (a solid content is 60%), and final pH is 4.8. Then, flash drying is performed to obtain graphite powder. The graphite powder and high-temperature asphalt are placed in a kneader at a weight ratio of 1:0.03 and mixed at 280°C for 6 h to obtain a mixed product. The mixed product is sintered at 1800°C for 8 h under a nitrogen atmosphere to obtain graphite.

### Example 22

Hydrogen peroxide with a concentration of 35% is added to the second filtrate after defluorination in Example 2, reaction is performed after uniform stirring to generate an iron phosphate precipitate, and a third filtrate and the iron phosphate precipitate are obtained after filtering. A pH value of the third filtrate is adjusted to be greater than 7 by lithium hydroxide to generate a lithium phosphate precipitate. The lithium phosphate precipitate and the iron phosphate precipitate are mixed at a molar ratio of 0.35:1 to obtain lithium iron phosphate. Recycling of graphite is the same as that in Example 10.

### Comparative Example 1

(1) A spent lithium iron phosphate battery is discharged and disassembled. Powder obtained by performing crushing, magnetic separation, and sieving on a battery core is soaked in a sodium hydroxide solution. All electrode plates are completely soaked. A sodium hydroxide concentration is 1 mol/L, and soaking time is 2 h.
(2) A soaked mixed slurry is filtered. A main component of a filtrate is sodium aluminate. A filtered solid matter is put into a 100-ml citric acid solution of 1 mol/L. Heating and stirring are performed at 60°C for 3 h. A solid-liquid ratio is controlled to be 100 g/L. Filtering is performed after reaction. A main component of a filter residue is graphite, and the filtrate is a solution containing Li⁺, Fe²⁺, and PO₄³⁻.
(3) A molar ratio of Li:Fe:P in the filtrate in step (2) is determined according to an ICP test method, and then lithium carbonate and ferrous oxalate are added to adjust the molar ratio of Li:Fe:P to 1:1:1.
(4) Spray drying is performed on a solution obtained in step (3), and then calcining is performed at 650°C under a nitrogen inert atmosphere to obtain lithium iron phosphate.
(5) Pure water with a fourfold weight is added to wash the filter residue, and final pH is 4.8. Then, flash drying is performed on graphite whose solid content is 60% after filter pressing to obtain graphite powder. The graphite powder and high-temperature asphalt are placed in a kneader at a weight ratio of 1:0.03 and mixed at 280°C for 6 h to obtain a mixed product. The mixed product is sintered at 1800°C for 8 h under nitrogen protection to obtain graphite.

### Comparative Example 2

This example is substantially the same as Example 1. A difference lies in that treatment with a dilute phosphoric acid solution is not performed, but treatment with concentrated phosphoric acid is directly performed on a battery core.

### Performance test

Particle sizes (D50) of the lithium iron phosphate obtained in the above Examples 11 to 22 and Comparative Examples 1 and 2 are tested using a laser particle analyzer. Specific surface areas (BET) of the lithium iron phosphate obtained in the above Examples 11 to 22 and Comparative Examples 1 and 2 are tested using a nitrogen adsorption specific surface area tester. Ratios of lithium to iron (Li:Fe) and ratios of iron to phosphorus (Fe:P) in the lithium iron phosphate obtained in the above Examples 11 to 22 and Comparative Examples 1 and 2 are tested using an inductively coupled plasma atomic emission spectrometer. Contents of magnetic matters in the lithium iron phosphate obtained in the above Examples 11 to 22 and Comparative Examples 1 and 2 are tested using a magnetic rod. Carbon contents of the lithium iron phosphate obtained in the above Examples 11 to 22 and Comparative Examples 1 and 2 are tested using a carbon/sulfur infrared analyzer. A result is shown in Table 1.

**Table 1: Lithium iron phosphate test result**

| | D50/µm | BET/m²·g⁻¹ | Li:Fe | Fe:P | Magnetic matter content/ppb | Carbon content/% |
|---|---|---|---|---|---|---|
| Example 11 | 3.0 | 10.5 | 1.02:1 | 0.968:1 | 500 | 2.6 |
| Example 12 | 2.8 | 10.2 | 1.02:1 | 0.965:1 | 530 | 2.7 |
| Example 13 | 2.8 | 10.3 | 1.02:1 | 0.965:1 | 510 | 2.6 |
| Example 14 | 2.9 | 10.1 | 1.02:1 | 0.966:1 | 520 | 2.6 |
| Example 15 | 2.8 | 10.2 | 1.02:1 | 0.966:1 | 510 | 2.7 |
| Example 16 | 3.0 | 10.4 | 1.03:1 | 0.970:1 | 560 | 2.5 |
| Example 17 | 2.7 | 10.9 | 1.02:1 | 0.960:1 | 450 | 2.8 |
| Example 18 | 2.5 | 11.5 | 1.03:1 | 0.954:1 | 430 | 2.8 |
| Example 19 | 3.1 | 10.4 | 1.02:1 | 0.968:1 | 500 | 2.6 |
| Example 20 | 2.8 | 10.5 | 1.00:1 | 0.985:1 | 800 | 2.4 |
| Example 21 | 2.1 | 15 | 1.03:1 | 0.992:1 | 600 | 3.1 |
| Example 22 | 5.2 | 8.4 | 1.02:1 | 0.985:1 | 600 | 2.7 |
| Comparative Example 1 | 1.7 | 18 | 1.04:1 | 0.970:1 | 1000 | 2.8 |
| Comparative Example 2 | 2.8 | 10.6 | 1.02:1 | 0.972:1 | 550 | 2.7 |

Impurity elements and contents (mass percentages) of the impurity elements in the lithium iron phosphate obtained in the above Examples 11 to 22 and Comparative Examples 1 and 2 are tested using an inductively coupled plasma atomic emission spectrometer. A result is shown in Table 2.

**Table 2: Impurity elements and contents of the impurity elements in lithium iron phosphate**

| | Na/% | Mg/% | Ca/% | Zn/% | Cu/% | F/% | Al/% | Mn/% | Ni/% |
|---|---|---|---|---|---|---|---|---|---|
| Example 11 | 0.0031 | 0.0024 | 0.0053 | / | / | 0.0001 | 0.0030 | / | / |
| Example 12 | 0.0030 | 0.0020 | 0.0043 | / | / | 0.0003 | 0.0020 | / | / |
| Example 13 | 0.0040 | 0.0052 | 0.0113 | / | / | 0.0208 | 0.0025 | / | / |
| Example 14 | 0.0013 | 0.0010 | 0.0016 | / | / | 0.0003 | 0.0010 | / | / |
| Example 15 | 0.0027 | 0.0015 | 0.0033 | / | / | 0.0003 | 0.0020 | / | / |
| Example 16 | 0.0021 | 0.0042 | 0.0060 | / | / | 0.0003 | 0.0020 | / | / |
| Example 17 | 0.0042 | 0.0026 | 0.0035 | / | / | 0.0006 | 0.0010 | / | / |
| Example 18 | 0.0028 | 0.0016 | 0.0022 | / | / | 0.0005 | 0.0021 | / | 0.0004 |
| Example 19 | 0.0031 | 0.0004 | 0.0013 | / | / | 0.0001 | 0.0017 | / | / |
| Example 20 | 0.0035 | 0.0048 | 0.0103 | / | / | 0.0015 | 0.0036 | / | 0.0015 |
| Example 21 | 0.0023 | 0.0008 | 0.0037 | 0.0007 | 0.0004 | 0.0002 | 0.0019 | 0.0008 | 0.0006 |
| Example 22 | 0.0250 | 0.0025 | 0.0062 | / | / | 0.0004 | 0.0020 | / | / |
| Comparative Example 1 | 0.1835 | 0.0018 | 0.0415 | 0.0015 | / | 0.0006 | 0.8041 | 0.0015 | 0.0012 |
| Comparative Example 2 | 0.0945 | 0.0036 | 0.0345 | 0.0015 | / | 0.0004 | 0.5083 | / | / |

Particle sizes (D50) of the graphite obtained in the above Examples 11 to 22 and Comparative Examples 1 and 2 are tested using a laser particle analyzer. Specific surface areas (BET) of the graphite obtained in the above Examples 11 to 22 and Comparative Examples 1 and 2 are tested using a nitrogen adsorption specific surface area tester. Graphitization degrees of the graphite obtained in the above Examples 11 to 22 and Comparative Examples 1 and 2 are tested using an X-ray diffraction analyzer. A result is shown in Table 3. A graphite test result in Example 13 is the same as that in Example 12, and a graphite test result in Example 22 is the same as that in Example 21. Details are not described in the table.

**Table 3: Graphite test result**

| | D50/µm | BET/m²·g⁻¹ | Graphitization degree/% |
|---|---|---|---|
| Example 11 | 13.1 | 2.6 | 93.5 |
| Example 12 | 13.2 | 2.7 | 93.4 |
| Example 14 | 13.0 | 2.6 | 93.6 |
| Example 15 | 13.1 | 2.6 | 93.6 |
| Example 16 | 13.2 | 2.7 | 93.1 |
| Example 17 | 13.1 | 2.6 | 93.5 |
| Example 18 | 13.3 | 2.7 | 93.6 |
| Example 19 | 13.2 | 2.6 | 93.4 |
| Example 20 | 13.3 | 2.6 | 93.4 |
| Example 21 | 14.0 | 2.9 | 96.5 |
| Comparative Example 1 | 13.0 | 3.1 | 96.2 |
| Comparative Example 2 | 13.2 | 2.7 | 93.1 |

A slurry is formed from the lithium iron phosphate obtained in the above Examples 11 to 22 and Comparative Examples 1 and 2, coated on an aluminum foil, dried, cut into a fixed size, and then prepared into a button cell with a model of CR2024. Metal lithium sheets are used for counter electrodes, a separator is made of polyethylene (PE), and an electrolyte is in a lithium hexafluorophosphate system. A lithium iron phosphate battery is prepared and used for related electrochemical performance tests. Charging is performed with a constant current of 0.1C, and a cut-off potential is 3.8 V. Then, a constant voltage is used until a current is 0.005C. Then, discharging is performed with a constant current of 0.1C until cut-off at 2.5 V. A specific capacity test is performed. A result is shown in Table 4.

**Table 4: Electrochemical performance result of lithium iron phosphate**

| | Specific capacity/mAh/g |
|---|---|
| Example 11 | 160 |
| Example 12 | 161 |
| Example 13 | 145 |
| Example 14 | 146 |
| Example 15 | 145 |
| Example 16 | 158 |
| Example 17 | 159 |
| Example 18 | 158 |
| Example 19 | 157 |
| Example 20 | 153 |
| Example 21 | 164 |
| Example 22 | 155 |
| Comparative Example 1 | 144 |
| Comparative Example 2 | 146 |

A slurry is formed from the graphite obtained in the above Examples 11 to 22 and Comparative Examples 1 and 2, coated on a copper foil, dried, cut into a fixed size, and then prepared into a button cell with a model of CR2024. Metal lithium sheets are used for counter electrodes, a separator is made of PE, and an electrolyte is in a lithium hexafluorophosphate system. A graphite battery is prepared and used for related electrochemical performance tests. Charging and discharging system: Discharging to 5 mV is performed with a constant current of 0.2C; discharging to 5 mV is performed with a constant current of 0.1C; discharging to 5 mV is performed with a constant current of 0.05C; and charging to 1.5 V is performed with a constant current of 0.1C, to obtain initial coulombic efficiency and a specific capacity. Initial coulombic efficiency = Constant current charge specific capacity/Sum of constant current discharge specific capacities at three stages. A result is shown in Table 5. A graphite test result in Example 13 is the same as that in Example 12, and a graphite test result in Example 22 is the same as that in Example 21. Details are not described in the table.

**Table 5: Electrochemical performance result of graphite**

| | Specific capacity/mAh/g | Initial coulombic efficiency/% |
|---|---|---|
| Example 11 | 305 | 93.5 |
| Example 12 | 308 | 93.4 |
| Example 14 | 310 | 93.6 |
| Example 15 | 308 | 93.5 |
| Example 16 | 304 | 93.2 |
| Example 17 | 307 | 93.5 |
| Example 18 | 310 | 93.1 |
| Example 19 | 307 | 93.4 |
| Example 20 | 301 | 92.1 |
| Example 21 | 295 | 93.1 |
| Comparative Example 1 | 293 | 94.1 |
| Comparative Example 2 | 285 | 92.5 |

It can be learned that in the comparative example 1, because the sodium hydroxide is used, the lithium iron phosphate includes a high level of sodium impurities, affecting purity of the lithium iron phosphate. In the comparative example 2, because the concentrated phosphoric acid is directly used, the aluminum foil in the spent battery is dissolved, and a high level of aluminum impurities are introduced, affecting purity of the lithium iron phosphate. In examples of this application, no excessive impurities are introduced, thereby ensuring purity and performance of the lithium iron phosphate. Compared with the comparative examples, because the lithium iron phosphate obtained in the examples has fewer impurity elements and higher purity, a specific capacity of a battery using the lithium iron phosphate is large, which is conducive to use of the battery. Compared with Example 13, the lithium iron phosphate in Example 12 is defluorinated during preparation, so that the lithium iron phosphate can fully exert performance of the lithium iron phosphate during use, thereby greatly improving a specific capacity of a battery. In addition, in this application, the graphite in the spent battery can be further recycled, and a battery made of the recycled graphite has a large specific capacity and high initial coulombic efficiency, which is conducive to use of the battery.

The above descriptions are example implementations of this application, but should not be construed as a limitation on the scope of this application. It should be noted that a person of ordinary skill in the art may make several improvements or polishing without departing from the principle of this application and the improvements or polishing shall fall within the protection scope of this application.

## Claims

1. A method for recycling battery material, comprising:
soaking an electrode or a battery core in a first phosphoric acid solution for separation to obtain an electrode material, a concentration of the first phosphoric acid solution being less than 10 wt.% (S101);
soaking the electrode material in a second phosphoric acid solution and performing filtering to obtain a first filtrate, a concentration of the second phosphoric acid solution being greater than or equal to 10 wt.% (S102); and
adding a first iron source to the first filtrate and performing filtering after reaction to obtain a second filtrate, the second filtrate having lithium ions, ferrous ions, and phosphate ions (S103).

2. The method according to claim 1, wherein the concentration of the second phosphoric acid solution is 10 wt.% to 85 wt.%.

3. The method according to claim 1 or 2, wherein the first iron source comprises at least one of elemental iron, ferric oxide, ferroferric oxide, and ferrous oxalate.

4. The method according to any one of claims 1 to 3, wherein soaking the electrode material in the second phosphoric acid solution and performing filtering to obtain the first filtrate comprises:
soaking the electrode material in the second phosphoric acid solution and maintenance at 50°C to 100°C for 3 h to 10 h, then performing filtering to obtain the first filtrate, the concentration of the second phosphoric acid solution being 10 wt.% to 50 wt.%; or
soaking the electrode material in the second phosphoric acid solution and maintenance at 25°C to 50°C for 0.5 h to 5 h, then performing filtering to obtain the first filtrate, the concentration of the second phosphoric acid solution being 50 wt.% to 85 wt.%.

5. The method according to any one of claims 1 to 4, wherein the electrode or the battery core comprises a phosphate positive electrode active material, and the phosphate positive electrode active material comprises at least one of lithium iron phosphate and lithium manganese iron phosphate.

6. The method according to claim 5, wherein a molar ratio of phosphoric acid in the second phosphoric acid solution to the phosphate positive electrode active material in the electrode material is (3-10):1.

7. The method according to any one of claims 1 to 6, further comprising:
after adjusting a molar ratio of the lithium ion to the ferrous ion to the phosphate ion in the second filtrate, obtaining the phosphate positive electrode active material through spray drying and sintering (S204).

8. The method according to claim 7, wherein adjusting the molar ratio of the lithium ion to the ferrous ion to the phosphate ion in the second filtrate comprises adjusting a molar ratio of the lithium ion to the ferrous ion in the second filtrate to 1.03 to 1.05, and adjusting a molar ratio of the phosphate ion to the ferrous ion in the second filtrate to 1.1 to 1.3.

9. The method according to claim 7 or 8, before the spray drying, further comprising adding a carbon source to the second filtrate;
an addition amount of the carbon source being 5% to 20% of a mass of the phosphate positive electrode active material in the second filtrate; and
the carbon source comprising at least one of glucose, sucrose, maltose, starch, lactose, polyethylene glycol, polyvinyl alcohol, and citric acid.

10. The method according to any one of claims 7 to 9, wherein a temperature of the spray drying is greater than 140°C, and the sintering comprises sintering at 550°C to 750°C for 2 h to 10 h.

11. The method according to any one of claims 1 to 6, further comprising:
adding an oxidant to the second filtrate, performing filtering after reaction to obtain an iron phosphate precipitate and a third filtrate, adjusting a pH value of the third filtrate to obtain a lithium phosphate precipitate, and solid-state synthesizing the lithium phosphate precipitate and a second iron source into the phosphate positive electrode active material (S304).

12. The method according to claim 11, wherein the second iron source is the iron phosphate precipitate.

13. The method according to claim 11 or 12, wherein the oxidant comprises hydrogen peroxide, and a concentration of the oxidant is 10% to 50%.

14. The method according to claim 11 or 12, wherein solid-state synthesizing the lithium phosphate precipitate and the second iron source into the phosphate positive electrode active material comprises:
under a reducing atmosphere, performing reaction on the lithium phosphate precipitate and the second iron source at 200°C to 400°C for 1 h to 5 h, and then performing reaction at a temperature of 550°C to 750°C for 5 h to 10 h, to obtain the phosphate positive electrode active material.

15. The method according to claim 11 or 12, wherein solid-state synthesizing the lithium phosphate precipitate and the second iron source into the phosphate positive electrode active material comprises:
under a reducing atmosphere, first heating up the lithium phosphate precipitate and the second iron source to 550°C to 750°C, and then performing reaction on the lithium phosphate precipitate and the second iron source at the temperature of 550°C to 750°C for 5 h to 10 h, to obtain the phosphate positive electrode active material, wherein a rate of the heating up is 2°C/min to 10°C/min.

16. The method according to claim 11 or 12, wherein solid-state synthesizing the lithium phosphate precipitate and the second iron source into the phosphate positive electrode active material comprises:
mixing the lithium phosphate precipitate, the second iron source, and a carbon source, performing reaction at 200°C to 400°C for 1 h to 5 h, and then performing reaction at 550°C to 750°C for 5 h to 10 h, to obtain the phosphate positive electrode active material.

17. The method according to any one of claims 1 to 16, wherein soaking the electrode or the battery core in the first phosphoric acid solution comprises:
soaking the electrode or the battery core in the first phosphoric acid solution under a condition of 20°C to 30°C for 1 h to 20 h, the concentration of the first phosphoric acid solution being 3 wt.% to 8 wt.%.

18. The method according to any one of claims 1 to 17, wherein adding the first iron source to the first filtrate and performing filtering after reaction to obtain the second filtrate comprises:
adding the first iron source to the first filtrate and performing filtering after reaction at 25°C to 90°C for 1 h to 5 h, to obtain the second filtrate.

19. The method according to any one of claims 1 to 18, further comprising:
performing defluorination on the second filtrate;
a fluoride ion concentration of the second filtrate after the defluorination being less than or equal to 10 ppm.

20. The method according to any one of claims 1 to 19, wherein filtering is performed after the electrode material is soaked in the second phosphoric acid solution, to obtain the first filtrate and a graphite residue;
the graphite residue and asphalt are mixed at 200°C to 280°C for 2 h to 20 h, to obtain a mixed product; and
heat treatment is performed on the mixed product at 1000°C to 1800°C for 3 h to 12 h under an inert atmosphere, to obtain graphite.
